(19) Europäisches Patentamt
European Patent Office
Office européen des brevets

(11) Veröffentlichungsnummer: **0 339 187**
**A2**

(12) # EUROPÄISCHE PATENTANMELDUNG

(21) Anmeldenummer: 89101704.8

(51) Int. Cl.4: **B01D 19/00 , G05D 9/02 , G05D 16/04**

(22) Anmeldetag: 01.02.89

(30) Priorität: 10.03.88 HU 114688

(43) Veröffentlichungstag der Anmeldung:
02.11.89 Patentblatt 89/44

(84) Benannte Vertragsstaaten:
AT BE CH DE ES FR GB GR IT LI LU NL SE

(71) Anmelder: VEGYIMÜVEKET EPITÖ ES SZERELÖ VALLALAT
Erzsébet királyné utja 1/c
Budapest XIV(HU)

(72) Erfinder: Pintér, Kálmán
Hengermalom u. 5/8
Budapest XI(HU)

(74) Vertreter: Füchsle, Klaus, Dipl.-Ing. et al
Hoffmann . Eitle & Partner Patentanwälte
Arabellastrasse 4
D-8000 München 81(DE)

(54) **Vereinigter Flüssigkeitspegel- und Druckregler für Separatoren.**

(57) Vereinigter Flüssigkeitspegel- und Druckregler für Separatoren, der einen für den Flüssigkeitspegel empfindlichen Schwimmer (12) aufweist, mit dem über eine steife vertikale Welle (13) zwei Ausflussquerschnittsregelorgane in mitbewegender Zwangsverbindung stehen.

Das Wesen der Erfindung ist, dass die Ausflussquerschnittsregelorgane als druckentlastete Schieber (8,9) ausgestaltet sind, wobei der eine Schieber (8) in den Gasausfluss (2), der anderer Schieber (9) in den Flüssigkeitsausfluss (3) des Separators so eingesetzt ist, dass die Ausflussquerschnitte des Gasausflusses (2) und des Flüssigkeitausflusses (3) durch die Schieber (8, bzw. 9) in Abhängigkeit von der Position des Schwimmers (12) geregelt werden.

Fig.5

# VEREINIGTER FLÜSSIGKEITSPEGEL- UND DRUCKREGLER FÜR SEPARATOREN

Die Erfindung betrifft einen vereinigten Flüssigkeitspegel- und Druckregler für Separatoren, die z.B. in der Ölindustrie und in der chemischen Industrie üblichen, zur Trennung von Medien verschiedener Phasen dienenden Separatoren verwendbar sind.

Auf dem Gebiet der Ölindustrie, der chemischen Industrie und sonstiger Industriezweige stellt die Separierung einen in weitem Kreise verwendeten Arbeitsgang dar, im Laufe dessen Medien verschiedener Phasen voneinander getrennt werden. Flüssige und gasförmige Medien werden im allgemeinen in unter Überdruck stehende Separatoren getrennt.

Die Bekannten Separatoren sind stehende oder horizontal angeordnete Einrichtungen. Die grundsätzliche Voraussetzung der kontinuierlichen Funktion besteht darin, dass die getrennten Phasen kontinuierlich abgeleitet werden müssen, und zwar in der Weise, dass der Flüssigkeitspegel und der Druck dabei konstant bleiben. Zur Sicherstellung des konstanten Niveaus ist es üblich, in den Ausflüssen der flüssigen und der gasförmigen Phasen regelnde Armaturen einzusetzen, die entweder mit Hilfe einer mechanischen Konstruktion oder mit Hilfe von Hilfsenergie, durch Zwischenschaltung eines, die Hilfsenergie benützenden Umwandlers betätigt werden. Im allgemeinen werden die gestellten zwei Aufgaben - nämlich die Regelung des Flüssigkeitspegels und des Druckes - mit zwei voneinander unabhängigen Einheiten erfüllt.

Bei der mechanischen Druckregelung wird in dem Gasanfluss meistens ein als Flatterventil ausgestaltetes Drosselele ment angeordnet, das z.B. von dem den Flüssigkeitspegel wahrnehmenden Schwimmer in Bewegung gesetzt wird.

Mechanische Flüssigkeitspegel- und Druckregler sind z.B. aus dem Fachbuch "Sbor, transport i podgotovka nefti" (Nedra Verlag, Moskau, 1975) bekannt, Figur 48, Seite 122, zeigt einen Mechanismus mit Schwimmer, der über steife Stangen die in die Flüssigkeitausflussleitung und in die Gasausflussleitung eingesetzten Flatterventile bewegt, und damit den Flüssigkeitspegel im Separator regelt.

Ein Nachteil dieser Lösung, ist dass zum Bewegen der Flatterventile erhebliche Kräfte erforderlich sind, und dass die erforderliche Kräfte von der Winkellage der Flatterventile, und der zu messenden Ergiebigkeit abhängig sind. Der Schwimmer muss deshalb auf das grösstmöglichste Drehmoment dimensioniert werden. Das erforderliche Drehmoment ist obendrein wegen der Reibkräfte an den Blockhülsen der Ausflusszapfen der Flatterventile und an den Zapfen des Betätigungsmechanismus bedeutend.

Wegen dieser Nachteile ist die obige Lösung nur begrenzt anwendbar.

Figur 35, Seiten 96-97 des obigen Fachbuches zeigt eine allgemein verbreitete, ähnliche Lösung, wobei ein Flatterventil nur in die Gasausflussleitung eingebaut ist. Ein Mangel dieser Lösung ist, dass die Entleerung des Separators nicht vermeidbar ist.

Ein Mechanismus, der die Aufgaben der Flüssigkeitspegel- und der Druckregelung simultan, ohne etwaige Hifsenergie realisieren könnte, ist bisher unbekannt.

Der grundsätzliche Nachteil der bekannten mechanischen Regelungen besteht darin, dass die ihnen zur Verfügung gestellte beschränkte Betätigungskraft zur Betätigung des Regelorgans im allgemeinen nicht genügend ist und dass die simultane Druck- und Flüssigkeitspegelregelung bisher nicht gelöst worden ist.

Zur Beseitigung der erwähnten Mängel werden mit Hilfsenergie betätigte Regeleinheiten angewendet. Der Nachteil dieser Lösungen besteht jedoch eben darin, dass sie Hilfsenergie benützen.

Ziel der Erfindung ist es, ein selbstregelndes System mit einfachem strukturellem Aufbau zu entwickeln, welches die Aufgaben der Druck- und Flüssigkeitspegelregelung simultan erfüllt, einen optimalen Druckabfall gewährleistet und weder Hilfsenergie, noch ständige Überwachung beansprucht.

Zur Lösung der gestellten Aufgabe wurde ein vereinigter Flüssigkeitspegel- und Druckregler entwickelt, der einen für den Flüssigkeitspegel empfindlichen Schwimmer aufweist, wobei - erfindungsgemäss - der Schwimmer über eine vertikale Welle mit zwei druckentlasteten Schiebern verbunden ist, und zwar derweise, dass die Schieber mit dem Schwimmer in einer mitbewegenden Zwangsverbindung stehen und der eine Schieber den Ausflussquerschnitt des Gases und der andere Schieber den Ausflussquerschnitt der Flüssigkeit des Separators regelt.

Die druckentlasteten Schieber haben eine zylindrische Hülse, die eine offene Stirnfläche aufweist. Die obere bzw. die untere Wellenhälfte ist an diese zylindrische Hülse angeschlossen. Die der offenen Stirnfläche entgegengesetzte Stirnfläche der zylindrischen Hülse ist entweder offen, oder die zylindrische Hülse ist im Bereich dieser Stirnfläche mit Durchgangsbohrungen für den Eintritt des Gases, bzw. der Flüssigkeit versehen. In der zylindrischen Hülse ist ein zylindrischer, einseitig geschlossener Regelkörper axial verschiebbar gelagert, welcher an seiner Mantelwand, in der Höhe der offenen Stirnfläche der zylindrischen Hülse, mindestens einen Spalt für den Eintritt des Gases, bzw. der Flüssigkeit aufweist. Der zylindrische Regelkörper bildet den End stutzen des Gasausflusses, bzw. des Flüssigkeitausflusses des Separators.

Der den Ausflussquerschnitt des Gases regelnde Schieber ist zweckdienlich an die obere Wellenhälfte der vertikalen Welle und der den Ausflussquerschnitt der Flüssigkeit regelnde Schieber an die untere Wellenhälfte der vertikalen Welle angeschlossen.

Der Schwimmer kann entweder im Inneren des Separators, oder ausserhalb dessen, in einer separaten Armatur, angeordnet werden.

Der erfindungsgemässe Separator kann gegebenenfalls mit einem an sich bekannten, massenausgleichenden und/oder krafterhöhenden Mechanismus ergänzt werden.

Die Erfindung wird anhand der beiliegenden Zeichnung näher erläutert. In der Zeichnung zeigt:

Figur 1: den schematischen Längsschnitt einer Ausführung der erfindungsgemässen Konstruktion,

Figur 2 und 3: die Einzelheiten von weiteren vorteilhaften Ausführungen der erfindungsgemässen Konstruktion in schematischer Darstellung,

Figur 4: den schematischen Längsschnitt einer weiteren Ausführung der erfindungsgemässen Konstruktion.

Figur 5: Längsschnitt einer Ausführungsform des druckentlasteten Schiebers.

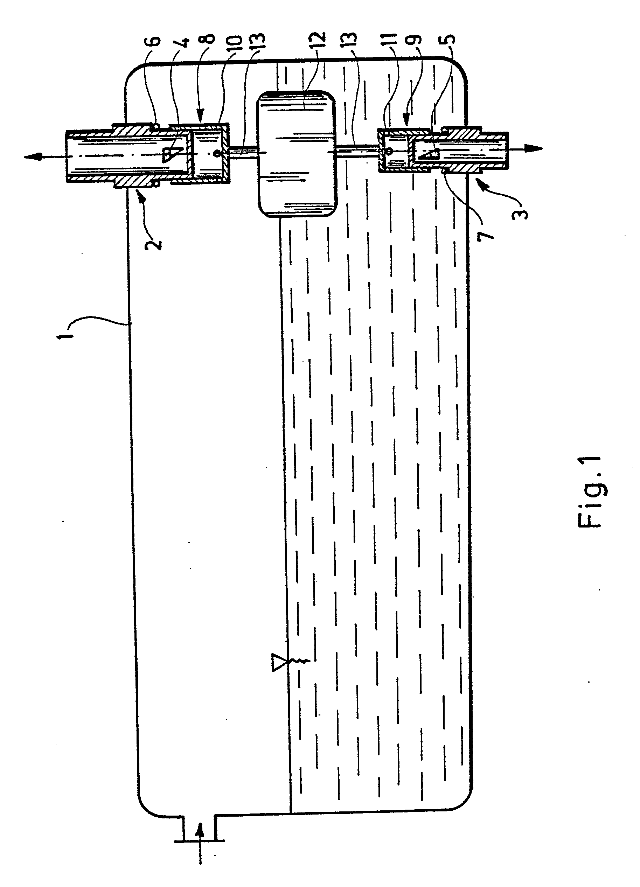

Wie es aus Figur 1 hervorgeht, ist der erfindungsgemässe Mechanismus an einem Separator 1 angeschlossen. Der Mechanismus ist aus einem Schwimmer 12 und zwei Schiebern 8 und 9 aufgebaut, die mit dem Schwimmer 12 über eine vertikale Welle 13 in mitbewegender Zwangsverbindung stehen. Der obere Schieber 8 ist an den Gasausfluss 2 des Separators 1, der untere Schieber 9 an den Flüssigkeitsausfluss 3 des Separators 1 angeschlossen.

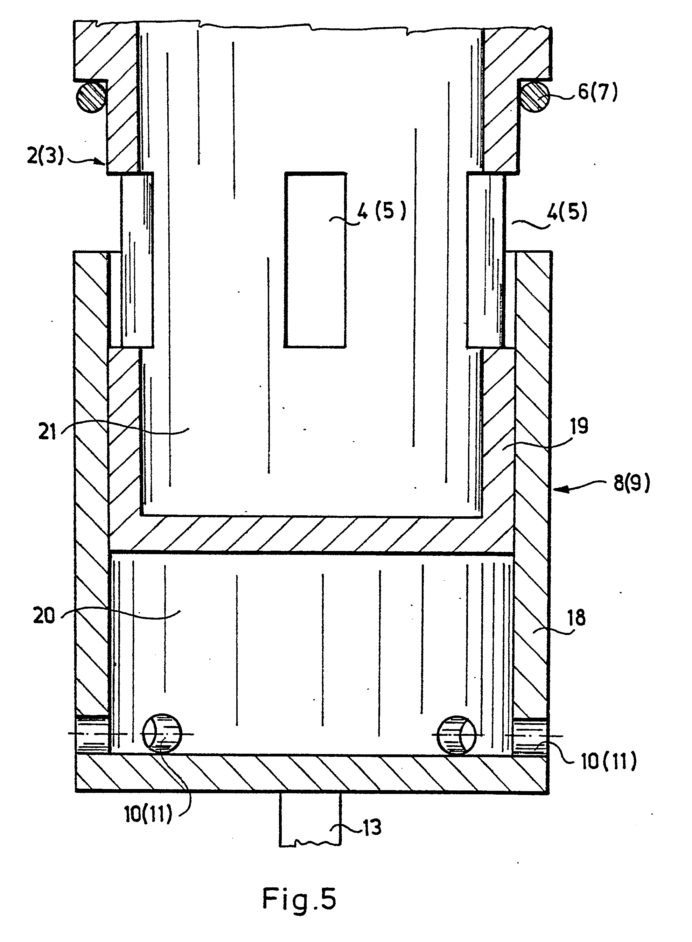

Die Schieber 8 und 9 sind erfindungsgemässe als druckentlastete Schieber ausgestaltet, wie es aus Figur 5 ersichtlich ist. Figur 5 zeigt als Beispiel den den Ausflussquerschnitt des Gasausflusses regelnden Schieber 8', der Schieber 9 hat jedoch die selbe Konstruktion.

Der Schieber 8 (bzw.9) weist eine zylindrische Hülse 18 auf, die mit der entsprechenden Wellenhälfte der vertikalen Welle 13 verbunden ist. Die untere Stirnfläche der zylindrischen Hülse 18 ist geschlossen. Im unteren Bereich der zylindrischen Hülse 18 sind Durchgangsbohrungen 10 (bzw. 11) vorgesehen, durch die das Gas (bzw. die Flüssigkeit) in den Raum 20 eintreten kann. In der zylindrischen Hülse 18 ist ein zylindrischer Regelkörper 19 axial verschiebbar gelagert. Die in die zylindrische Hülse 18 hineinragende Stirnfläche des Regelkörpers 19 ist geschlossen. In der Mantelwand des Regelkörpers sind vier axiale Spalten 4 (bzw. 5) ausgebildet, durch die das Gas (bzw. die Flüssigkeit) in den Raum 21 eintreten kann. Da der Regelkörper 19 den Endstutzen des Gasausflusses 2 (bzw. des Flüssigkeitausflusses 3) bildet, ist der Ausflussquerschnitt durch die axiale Spalten 4 (bzw. 5) geregelt. Die Zahl und Grösse der Spalten 4 (bzw. 5) werden entsprechend der erforderlichen Belastungen dimensioniert werden.

Dank den Durchgangsöffnungen 10 und 11 sind die Drücke im Raum 20 und im Raum 21 gleich. Während der axialen Versch iebung der mit dem Schwimmer 12 über die vertikale Welle 13 verbundenen zylindrischen Hülse 18 relativ zu dem Regelkörper 19 müssen also nur die Reibungskräfte zwischen den anschlagenden Zylinderflächen überwunden werden. Bei einer geeigneten Auführung der Schieber 8 bzw. 9 nach Figur 5 sind diese Reibungskräfte nicht bedeutend.

Wenn nun die Flüssigkeitsergiebigkeit zunimmt, steigt der Schwimmer empor, worauf der Schieber 9 den Ausflussquerschnitt der Spalten 5 vergrössert und gleichzeitig der Schieber 8 den Ausflussquerschnitt der Spalten 4 verringert. Das bedeutet, dass simultan mit der Vergrösserung des Ausflussquerschnittes des Flüssigkeitsausflusses 3 der Ausflussquerschnitt des Gasausflusses 2 verringert wird. Der Druck erhöht sich im System, die Abfuhr der erhöhten Flüssigkeitsergiebigkeit wird gefördert.

Die Stutzen des Gasausflusses 2 bzw. des Flüssigkeitsausflusses 3 sind mit Dichtungen 6 bzw. 7 versehen, die den Ausfluss beim geschlossenen Schieber 8, bzw. 9 beseitigen.

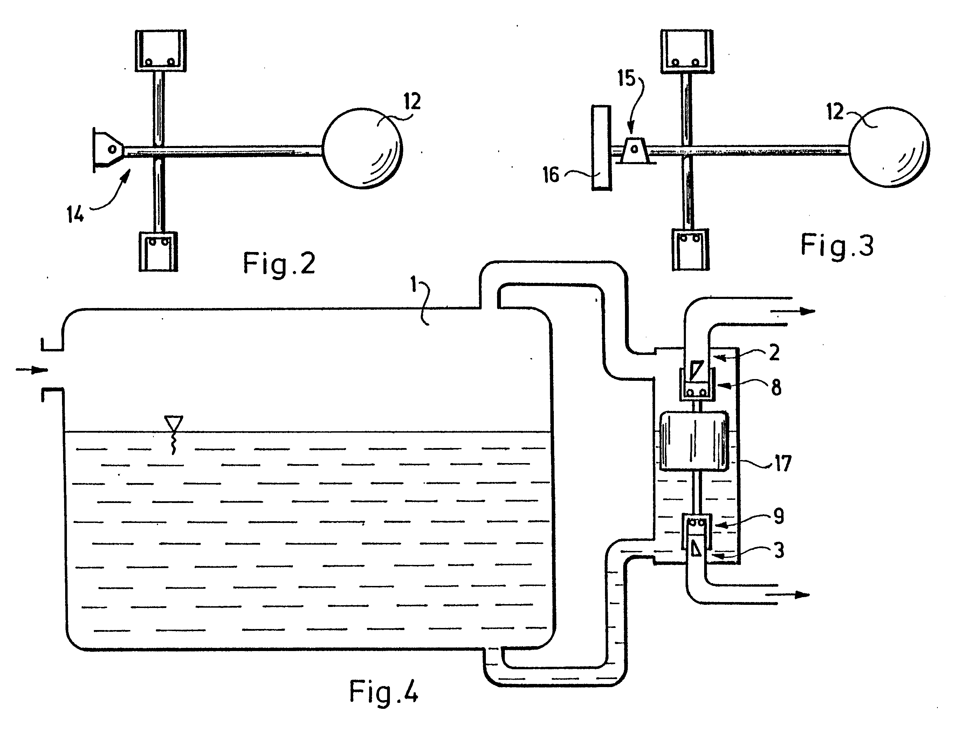

Figur 2 zeigt eine mit einem krafterhöhenden Mechanismus ergänzte Ausführung des erfindungsgemässen Flüssigkeitspegel- und Druckreglers. Der krafterhöhenden Mechanismus ist in Form eines gelenkigen, einarmigen Hebels 14 ausgeführt.

Der Schwimmer 12 in Figur 3 ist mit einem krafterhöhenden und massenausgleichenden Mechanismus versehen, der als zweiarmiger Hebel 15 mit einem Ausgleichsgewicht 16 ausgestaltet ist.

In der Ausführung nach Figur 1 ist die erfindungsgemässe Konstruktion im Inneren des Separators 1 angeordnet.

Figur 4 zeigt einen Ausführungsbeispiel, wobei die erfindungsgemässe Konstruktion in einer selbstständigen Armatur 17 angeordnet ist, an deren oberen Eingang der Gasausfluss 2 und an deren unteren Eingang der Flüssigkeitsausfluss 3 des Separators 1 angeschlossen ist. Der Aufbau entspricht übrigens jenem nach Figur 1.

Aus den obigen geht eindeutig hervor, dass die erfindungsgemässe Lösung einen einfachen Aufbau gewähr leistet, die beiden Funktionen der Regelung des Druckes bzw. des Flüssigkeitspegels simultan erfüllt und äussere Hilfsenergie überhaupt nicht beansprucht wird. Eine weitere vorteilhafte Wirkung zeigt sich darin, dass infolge einer Selbstregelung des Systems eine ständige Überwachung überflüssig ist.

**Ansprüche**

1. Vereinigter Flüssigkeitspegel- und Druckregler für Separatoren, der einen für den Flüssigkeitspegel empfindlichen Schwimmer aufweist, mit dem über eine steife vertikale Welle zwei Ausflussquerschnittsregelorgane in mitbewegender Zwangsverbindung stehen, **dadurch gekennzeichnet,** dass die Ausflussquerschnittsregelorgane als druckentlastete Schieber (8,9) ausgestaltet sind, wobei der eine Schieber (8) in den Gasausfluss (2) und der andere Schieber (9) in den Flüssigkeitausfluss (3) des Separators so eingesetzt ist, dass die Ausflussquerschnitte des Gasausflusses (2) und des Flüssigkeitausflusses (3) durch die Schieber (8, bzw. 9) geregelt werden.

2. Vereinigter Flüssigkeitspegel- und Druckregler für Separatoren,
**dadurch gekennzeichnet,** dass
- die druckentlasteten Schieber (8, 9) eine zylindrische Hülse (18) mit mindestens einer offenen Stirnfläche und einen in der zylindrischen Hülse (18) axial verschiebbar gelagerten, einseitig geschlossenen zylindrischen Regelkörper (19) aufweisen,
- die geschlossene Stirnfläche des Regelkörpers (19) in die zylindrische Hülse (18) hineinragt,
- die zylindrische Hülse (18) mit der vertikalen Welle (13) verbunden ist,
- im Bereich der dem Regelkörper (19) entgegengesetzten Stirnfläche der zylindrischen Hülse (18) mindestens eine Durchgangsbohrung (10, 11) für den Eintritt des Gases, bzw. der Flüssigkeit vorgesehen ist,
- in der Mantelwand des Regelkörpers (19), in der Höhe der offenen Stirnfläche der zylindrischen Hülse (18) mindestens ein Spalt (4, 5) für den Eintritt des Gases, bzw. der Flüssigkeit ausgestaltet ist, und
- der zylindrische Regelkörper (19) den Endstutzen des Gasausflusses (2), bzw. des Flüssigkeitsausflusses (3) bildet.

3. Vereinigter Flüssigkeitspegel- und Druckregler für Separatoren nach Anspruch 1 oder 2, **dadurch gekennzeichnet,** dass der Schwimmer (12) im Inneren des Separators (1) angeordnet ist.

4. Vereinigter Flüssigkeitspegel- und Druckregler für Separatoren nach Anspruch 1 oder 2, **dadurch gekennzeichnet,** dass der Schwimmer (12) in einer ausserhalb des Separators (1) vorhandenen, separaten Armatur (17) angeordnet ist.

5. Vereinigter Flüssigkeitspegel- und Druckregler für Separatoren nach einem der Ansprüche 1 bis 4, **dadurch gekennzeichnet,** dass mit dem Schwimmer (12) ein massenausgleichender und/oder ein krafterhöhender Mechanismus verbinden sind/ist.

Fig.1

Fig.2

Fig.3

Fig.4

EP 0 339 187 A2

Fig.5